# EUROPÄISCHE PATENTSCHRIFT

(11) **EP 1 125 351 B1**
(45) Veröffentlichungstag und Bekanntmachung des Hinweises auf die Patenterteilung: **11.11.2009**
(21) Anmeldenummer: 00971241.5
(22) Anmeldetag: 26.08.2000
(51) Int. Cl.: H02H 11/00

(54) **SCHUTZSCHALTUNG FÜR EINE REIHENSCHALTUNG AUS LEISTUNGSHALBLEITER-ENDSTUFE UND INDUKTIVEM VERBRAUCHER**
PROTECTIVE CIRCUIT FOR A SERIES CONNECTION OF A POWER SEMI-CONDUCTOR END STAGE AND AN INDUCTIVE CONSUMER
CIRCUIT DE PROTECTION DESTINE A UN MONTAGE EN SERIE COMPOSE D'ETAGES DE SORTIE A SEMI-CONDUCTEURS DE PUISSANCE ET D'UN CONSOMMATEUR INDUCTIF

(30) Priorität: 01.09.1999 DE 19941489
(43) Veröffentlichungstag der Anmeldung: 22.08.2001
(73) Patentinhaber: ROBERT BOSCH GMBH, 70442 Stuttgart (DE)
(72) Erfinder: EISENHARDT, Harald, 71277 Rutesheim (DE); RASCH, Bernhard, 70736 Fellbach (DE); FALLIANO, Rolf, 73635 Rudersberg (DE)
(86) Internationale Anmeldenummer: PCT/DE2000/002936
(87) Internationale Veröffentlichungsnummer: WO 2001/017088

(56) Entgegenhaltungen:
- DE-A- 19 732 094
- DE-A1- 19 817 792
- US-A- 5 625 518

## Beschreibung

Die Erfindung betrifft eine Schutzschaltung in Verbindung mit einer Reihenschattung aus einer Leistungshalbleiter-Endstufe und einem induktiven Verbraucher sowie einen dem induktiven Verbraucher parallel geschalteten Freilaufkreis aus einer Freilaufdiode und einem in Reihe geschalteten Verpolschutz-Halbleiterschalter, wobei die Leistungshalbleiter-Endstufe in Abhängigkeit von einem vorgegebenen Sollwert mit einem pulsweitenmodulierten Steuersignal ein- und ausschaltbar ist, und wobei in dem Freilaufkreis aus Freilaufdiode und Verpolschutz-Halbleiterschalter oder in der Reihenschaltung aus induktivem Verbraucher und Leistungshlableiter-Endstufe eine Stelle auf eine Spannung oder einen Strom überwacht ist. Eine derartige Schutzschaltung ist beispielsweise aus der DE 19817 792 A1 bekannt.

Derartige Schutzschaltungen bringen mit fehlerfreien Bauelementen einen ausreichenden Verpolschutz, d.h. einen Schutz der Bauelemente vor Überlastung und Zerstörung bei verpolt angelegter Versorgungsspannung. Um einen wirkungsvollen Verpolschutz zu erhalten, ist es bekannt, in den Freilaufkreis einen zusätzlichen Leistungshalbleiterschalter einzuschalten. Dieser zusätzliche

Leistungshalbleiterschalter wird von der Ladungspumpe gesteuert und zwar so, dass dieser im normalen Betrieb im Freilaufkreis leitend ist, während er bei verpolter Versorgungsspannung den Stromfluss über die Freilaufdiode durch den nichtleitenden Zustand unterbricht.

Treten Unregelmäßigkeiten in der Schaltung auf, die diesen Leistungshalbleiterschalter nicht in dieser Weise steuern, dann treten unkontrollierte Überspannungen in der Schaltung auf, die zur Zerstörung von Bauelementen führen. Als Folge des Defektes können Brände entstehen, die insbesondere beim Einsatz der Schaltung in einem Kraftfahrzeug zum Fahrzeugbrand führen können.

Es ist Aufgabe der Erfindung, eine Schutzschaltung der eingangs erwähnten Art so zu verbessern, dass Defekte an der Ladungspumpe oder des Verpolschutz-Halbleiterschalters, die zu einem nicht ordnungsgemäß funktionierenden Freilaufkreis führen, erkannt und Maßnahmen zum Schutz der Bauelemente der Schaltung vor Zerstörung ergriffen werden können.

Diese Aufgabe wird nach der Erfindung dadurch gelöst, dass mit der Spannung bzw. dem Strom, die bzw. der beim Nichtfunktionieren des Freilaufkreises auftritt bzw. ausfällt, die Abschaltung der Ansteuerung der Leistungshalbleiter-Endstufe einleitbar ist.

Mit dieser Spannungs- oder Stromüberwachung wird das Nichtfunktionieren des Freilaufkreises - Spannungsanstieg über eine vorgegebenen Spannungs- oder Stromausfall - erkannt und die Ansteuerung der Leistungshalbleiter-Endstufe abgeschaltet, so daß die kritischen Bauelemente in der Schaltung sicher vor Überlastung geschützt sind. Die Leistungshalbleiter-Endstufe ist dann stets nichtleitend, d.h. hochohmig.

Nach einer Ausgestaltung erfolgt die Ansteuerung der Leistungshalbleiter-Endstufe dadurch, dass die Leistungshalbleiter-Endstufe über eine PWM-Steuerung ansteuerbar ist, und dass die (der) im Fehlerfall auftretende erhöhte Spannung oder Stromausfall im Freilaufkreis die PWM-Steuerung abschaltet.

Um einen absoluten Schutz gegen Zerstörung von Bauelementen zu erhalten, ist eine Ausgestaltung von Vorteil, die dadurch gekennzeichnet ist, dass die Abschaltung der PWM-Steuerung in einer vorgegebenen Zeit gleich oder kleiner 10 ms nach dem Auftreten des Fehlerfalles erfolgt.

Ist am Verbindungspunkt zwischen Freilaufdiode und Verpolschutz-Halbleiterschalter ein Pufferkondensator angeschaltet, um Rückwirkungen des getakteten Betriebs des Verbrauchers auf die Versorgungsspannung weitgehend zu eliminieren, wird die Spannung am Pufferkondensator auf einen Anstieg über einen vorgegebenen Wert erfasst. Die erhöhte Spannung am Pufferkondensator wird als Abschaltesignal an die PWM-Steuerung weitergeleitet. Dabei kann zur Vereinfachung der Abschaltung der PWM-Steuerung vorgesehen sein, dass die erhöhte Spannung am Pufferkondensator über einen Analog-Digital-Wandler als digitales Abschaltsignal an die PWM-Steuerung weiterleitbar ist.

Die Weitergabe des Abschaltesignals vom Pufferkondensator kann nach einer Weiterbildung auch so erfolgen, dass die Spannung am Pufferkondensator über einen Spannungsteiler reduziert und erneut geglättet an den Analog-Digital-Wandler weiterleitbar ist.

Eine definierte Ansprechschwelle im Überwachungskreis wird nach einer Ausgestaltung dadurch erreicht, dass die Spannung am Pufferkondensator oder die reduzierte Spannung in einem Komparator mit einer vorgegebenen Referenzspannung vergleichbar ist, und dass der Komparator ein digitales Abschaltsignal an die PWM-Steuerung weiterleitet, wenn die Spannung am Pufferkondensator oder die reduzierte Spannung übersteigt.

Die Abschaltung der PWM-Steuerung lässt sich dann sicher ausführen, wenn die Ausgestaltung so vorgenommen wird, dass der Komparator mit einem Selbstschaltkreis versehen ist, der den Abschaltzustand aufrechterhält, und dass der stabile Abschaltzustand des Komparators mittels eines dem Komparator von der PWM-Steuerung zuführbaren Rückstellsignal aufhebbar ist. Das Rückstellsignal ist erforderlich, um die Schaltung nach Behebung des Defektes wieder betriebsbereit zu schalten.

Eine gleichwertige Spannungsüberwachung lässt sich dadurch erreichen, dass die Drain-Ground-Spannung der Leistungshalbleiter-Endstufe in Low-Side-Schaltung überwacht ist, dass die Drain-Ground-Spannung in einen Komparator mit einer vorgegebenen Referenzspannung vergleichbar ist, dass der Komparator ein digitales Abschaltesignal an die PWM-Steuerung abgibt, wenn die Drain-Ground-Spannung die Referenzspannung übersteigt, und dass mit dem Abschaltesignal die Ansteuerung der Leistungshalbleiter-Endstufe unterbindbar und die Referenzspannung für den Komparator unwirksam schaltbar ist. Mit dieser Schutzschaltung ist auch die Leistungshalbleiter-Endstufe eindeutig mit in den Schutz einbezogen.

Eine einfache Spannungsüberwachung ergibt sich dadurch, dass der Freilaufkreis auf Ausfall des getakteten Freilaufstromes überwacht ist.

Die Erfindung wird anhand von mehreren, in der Zeichnung dargestellten Ausführungsbeispielen näher erläutert. Es zeigen:
- Fig. 1: eine Schutzschaltung mit Überwachung der Spannung am Puffer- kondensator und analogem Abschaltesignal,
- Fig. 2: eine Schutzschaltung mit Überwachung der Spannung am Puffer- kondensator und Vergleich mit einer vorgegebenen Referenz- spannung zum Ableiten eiens digitalen Abschaltesignals,
- Fig. 3: eine Schutzschaltung ähnlich der nach Fig. 3 mit zu-sätzlichem Selbsthaltekreis und Rückstellsignal und
- Fig. 4: eine Schutzschaltung mit Überwachung der Drain-Ground-Span- nung an der Leistungshalbleiter-Endstufe.

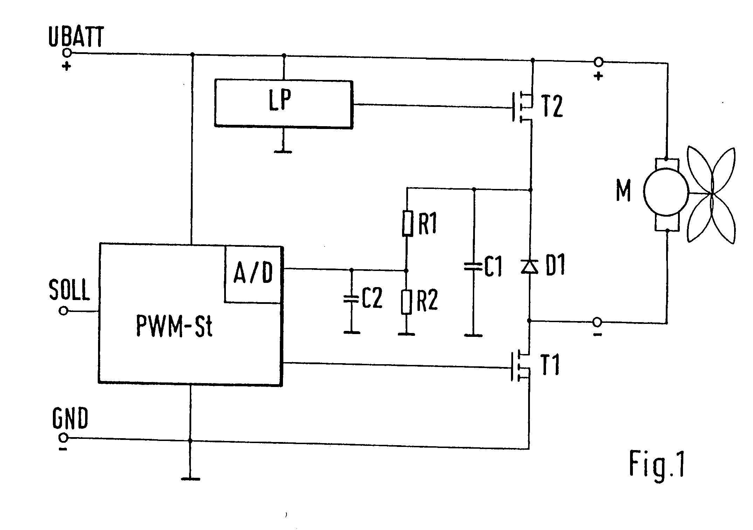

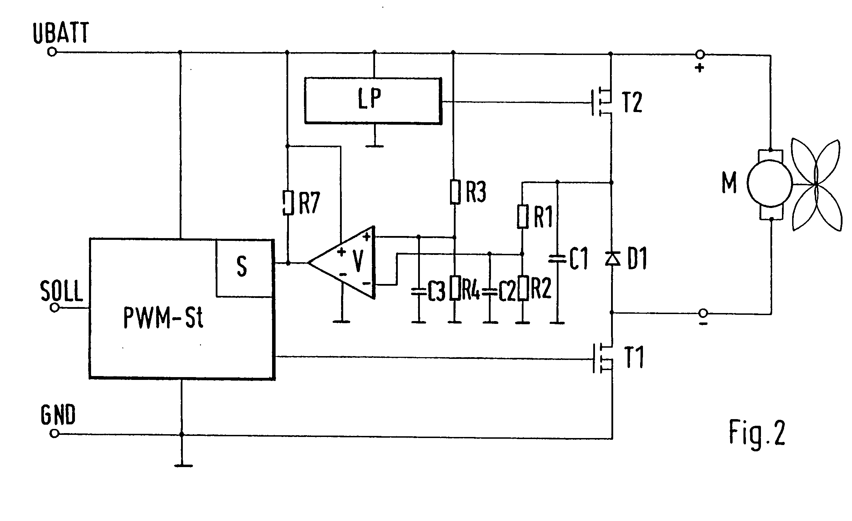

Wie Fig. 1 zeigt, speist die Gleichstrom-Versorgungsspannung Ubatt eine PWM-Steuerung PWM-St und eine Ladungspumpe LP, sowie eine Reihenschaltung aus Leistungshalbleiter-Endstufe T1 und einem Motor als induktiver Verbraucher M, der z.B. ein Gebläse antreibt. In Abhängigkeit von einem vorgebbaren Sollwert Soll steuert die PWM-Steuerung PWM-St das Gate der Leistungshalbleiter-Endstufe T1 mit pulsweitenmodulierten Steuersignalen im Taktbetrieb. In den Pausen der Steuersignale ist die Leistungshalbleiter-Endstufe T1 hochohmig und die am Motor auftretende Abschaltespannung wird im Frei-laufkreis abgebaut, der dem Motor parallel geschaltet ist und eine Reihen-schaltung aus Freilaufdiode D1 und zusätzlichem Verpolschutz-Halbleiterschalter T2 besteht. Dieser Verpolschutz-Halbleiterschalter T2 wird durch die Ladungspumpe LP zumindest in den stromlosen Abschnitten der Leistungshalbleiter-Endstufe T1 leitend gesteuert, so dass der Freilaufstrom fliessen kann. Wird die Versorungsspannung Ubatt verpolt angelegt, dann steuert die Ladungspumpe LP den Verpolschutz-Halbleiterschalter T2 in den nichtleitenden Zustand, so dass dieser einen ungewollten Stromfluss über die Freilaufdiode D1 verhindert. Die Schutzschaltungen nach Fig. 2 bis Fig. 4 arbeiten in gleicher Weise, so dass bei diesen nur noch die Unterschiede zur Schutzschaltung nach Fig. 1 herausgestellt werden.

An dem Verbindungspunkt zwischen dem Verpolschutz-Halbleiterschalter T2 und der Freilaufdiode D1 ist ein Pufferkondensator C1 angeschaltet, an dem bei fehlerhafter Funktion des Freilaufkreises - Ladungspumpe LP oder Verpolschutz-Halbleiterschalter T2 defekt - die Spannung unkontrolliert über einen vorgegebenen Betriebswert ansteigen kann. Die Spannung am Pufferkondensator C1 wird über einen Spannungsteiler aus den Widerständen R1 und R2 reduziert und über einen weiteren Kondensator C2 noch einmal geglättet. Die so abgegriffene Spannung wird einem Analog-Digital-Wandler in der PWM-Steuerung PWM-St zugeführt, der beim Überschreiten eines vorgegebenen Spannungswertes, der ein Nichtfunktionieren des Freilaufkreises zufolge hat, ein digitales Abschaltesignal für die PWM-Steuerung PWM-St abgibt. Damit wird die Ansteuerung der Leistungshalbleiter-Endstufe T1 unterbunden, so dass der weitere Spannungsanstieg an dem Pufferkondensator C1 beendet wird und alle Bauelemente der Schaltung vor Überlastung und Zerstörung geschützt sind.

Bei der Schutzschaltung nach Fig. 2 wird die reduzierte Spannung am Kondensator C2 einem Komparator V zugeführt, der diese mit einer am Spanungsteiler aus den Widerständen R3 und R4 abgegriffenen Referenzspannung vergleicht, und ein digitales Abschaltesignal an eine Schaltstufe S der PWM-Steuerung PWM-St abgibt, wenn die Spannung am Kondensator C2 die Referenzspannung am Kondensator C3 übersteigt. Der Widerstand R7 am Ausgang des Komparators V dient zur Ableitung des digitalen Abschaltesignales, wenn sich das Potential am Ausgang des Komparators V ändert.

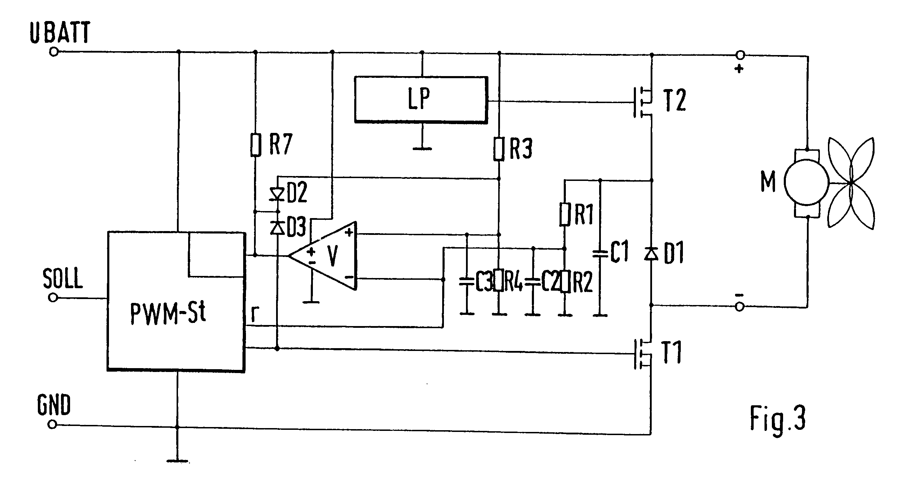

Beim Ausführungsbeispiel nach Fig. 3 ist am Komparator V zusätzlich ein Selbstschaltekreis vorgegeben, der die Dioden D2 und D3 aufweist und vom Spannungsleiter und den Widerständen R3 und R4 gespeist wird. Sobald der Komparator V in den Schaltzustand übergeht, der das Übersteigen der Referenzspannung anzeigt, bleibt der Schaltzustand des Komparators V aufrechterhalten, bis aus der PWM-Steuerung PWM-St ein Rückstellsignal r dem Komparator zugeführt wird. Dies kann nach Behebung des Fehlers in der gesamten Schaltung erfolgen.

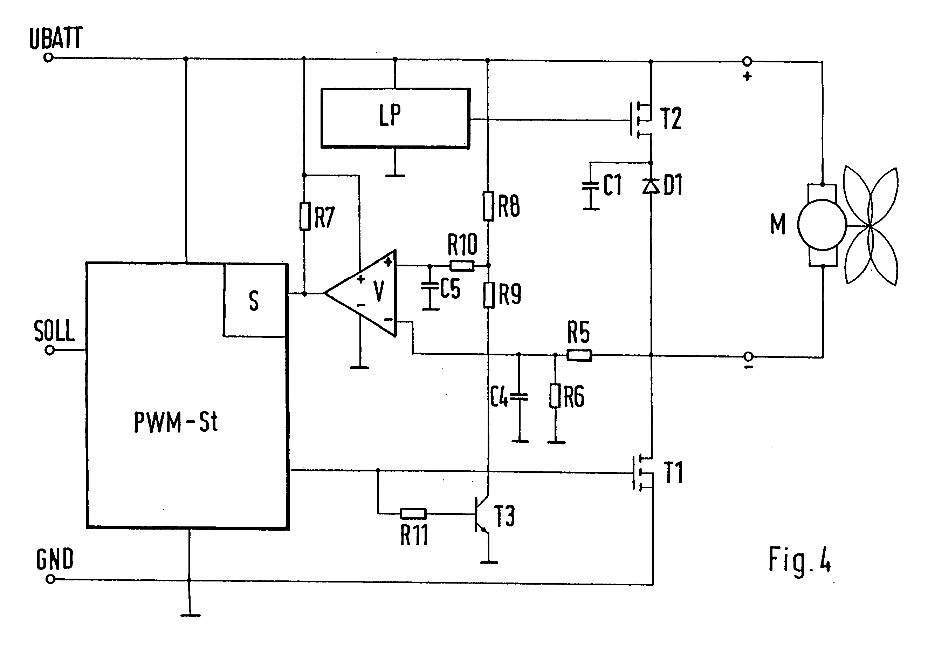

Schliesslich zeigt Fig. 4 ein Ausführungsbeispiel, bei dem die Drain-Ground-Spannung der in Low-Side-Schaltung betriebenen Leistungshalbleiter-Enstufe T1 als N-Kanal-MOS-FET überwacht ist. Diese Spannung wird an einem Spannungsteiler aus den Widerständen R5 und R6 reduziert abgegriffen und einem Kondensator C4 zugeführt. Die Spannung am Kondensator C4 wird wie die Referenzspannung am Kondensator C5, die am Spannungsteiler aus den Widerständen R8 und R9 und dem Halbleiterschalter T3 abgegriffen wird, dem Komparator V zugeführt. Über den Widerstand R11 wird der Halbleiterschalter T3 vom PWM-Steuersignal der PWM-Steuerung PWM-St gesteuert. Die Referenzspannung liegt über den Widerstand R10 am Kondensator C5. Tritt am Ausgang des Komparators V das digitale Abschaltesignal auf, dann unterbricht die Schaltstufe S in der PWM-Steuerung PWM-St die Aussteuerung der Leistungshalbleiter-Endstufe T1 und steuert über den Halbleiterschalter T3 die Referenzspannung so, dass der Komperator V kein digitales Abschaltesignal mehr abgibt.

## Patentansprüche

1. Schutzschaltung in Verbindung mit einer Reihenschaltung aus einer Leistungshalbleiter-Endstufe (T1) und einem induktiven Verbraucher (M) sowie einem dem induktiven Verbraucher (M) parallel geschalteten Freilaufkreis aus einer Freilaufdiode (D1) und einem in Reihe geschalteten Verpolschutz-Halbleiterschalter (T2),
wobei die Leistungshalbleiter-Endstufe (T1) in Abhängigkeit von einem vorgegebenen Sollwert (Soll) mit einem pulsweitenmodulierten Steuersignal ein- und ausschaltbar ist, und
wobei in dem Freilaufkreis aus Freilaufdiode (D1) und Verpolschutz-Halbleiterschalter (T2) oder in der Reihenschaltung aus induktivem Verbraucher (M) und Leistungshalbleiter-Endstufe (T1) eine Stelle auf eine Spannung oder einen Strom überwacht ist,
**dadurch gekennzeichnet, dass**
der Verpolschutz-Halbleiterschalter (T2) über eine Ladungspumpe (LP) bei verpolter Versorgungsspannung nichtleitend steuerbar ist, und über die Spannung bzw. den Strom, welche bzw. welcher beim Nichtfunktionieren des Freilaufkreises an der Stelle auftritt bzw. ausfällt, die Abschaltung der Ansteuerung der Leistungshalbleiter-Endstufe (T1) einleitbar ist.

2. Schutzschaltung nach Anspruch 1,
**dadurch gekennzeichnet,**
**dass** die Leistungshalbleiter-Endstufe (T1) über eine PWM-Steuerung (PWM-St) ansteuerbar ist, und
**dass** die (der) im Fehlerfall auftretende erhöhte Spannung oder Stromausfall im Freilaufkreis die PWM-Steuerung (PWM-St) abschaltet.

3. Schutzschaltung nach Anspruch 2,
**dadurch gekennzeichnet,**
**dass** die Abschaltung der PWM-Steuerung (PWM-St) in einer vorgegebenen Zeit gleich oder kleiner 10 ms nach dem Auftreten des Fehlerfalles erfolgt.

4. Schutzschaltung nach einem der Ansprüche 1 bis 3,
**dadurch gekennzeichnet,**
**dass** am Verbindungspunkt zwischen Freilaufdiode (D1) und Verpolschutz-Halbleiterschalter (T2) ein Pufferkondensator (C 1) angeschaltet ist, dass im Fehlerfall die Spannung am Pufferkondensator (C1) über einen vorgegebenen Wert ansteigt, und
**dass** die erhöhte Spannung am Pufferkondensator (C1) als Abschaltsignal an die PWM-Steuerung (PWM-St) weiterleitbar ist.

5. Schutzschaltung nach Anspruch 4,
**dadurch gekennzeichnet,**
**dass** die erhöhte Spannung am Pufferkondensator (C1) über einen Analog-Digital-Wandler als digitales Abschaltsignal an die PWM-Steuerung (PWM-St) weiterleitbar ist.

6. Schutzschaltung nach Anspruch 4 oder 5,
**dadurch gekennzeichnet,**
**dass** die Spannung am Pufferkondensator (C1) über einen Spannungsteiler (R1, R2) reduziert und erneut geglättet (C2) an den Analog-Digital-Wandler weiterleitbar ist.

7. Schutzschaltung nach einem der Ansprüche 4 bis 6,
**dadurch gekennzeichnet,**
**dass** die Spannung am Pufferkondensator (C1) oder die reduzierte Spannung in einem Komparator (V) mit einer vorgegebenen Referenzspannung vergleichbar ist, und
**dass** der Komparator (V) ein digitales Abschaltsignal an die PWM-Steuerung (PWM-St) weiterleitet, wenn die Spannung am Pufferkondensator (C1) oder die reduzierte Spannung übersteigt.

8. Schutzschaltung nach Anspruch 7,
**dadurch gekennzeichnet,**
**dass** der Komparator (V) mit einem Selbsthaltekreis (D2, D3, R3) versehen ist, der den Abschaltezustand aufrechterhält, und dass der stabile Abschaltzustand des Komparators (V) mittels eines dem Komparator (V) von der PWM-Steuerung (PWM-St) zuführbaren Rückstellsignal (r) aufhebbar ist.

9. Schutzschaltung nach Anspruch 1,
**dadurch gekennzeichnet,**
**dass** die Drain-Ground-Spannung der Leistungshalbleiter-Endstufe (T1) in Low-Side-Schaltung überwacht ist,
**dass** die Drain-Ground-Spannung in einem Komparator (V) mit einer vorgegebenen Referenzspannung vergleichbar ist,
**dass** der Komparator (V) ein digitales Abschaltesignal an die PWM-Steuerung (PWM-St) abgibt, wenn die Drain-Ground-Spannung die Referenzspannung übersteigt, und
**dass** mit dem Abschaltesignal die Ansteuerung der Leistungshalbleiter-Endstufe (T1) unterbindbar und die Referenzspanung für den Komparator (V) unwirksam schaltbar ist.

10. Schutzschaltung nach Anspruch 1,
**dadurch gekennzeichnet,**
**dass** der Freilaufkreis auf Ausfall des getakteten Freilaufstromes überwacht ist.

## Claims

1. Protective circuit in conjunction with a series circuit comprising a power semiconductor output stage (T1) and an inductive load (M) as well as a freewheeling circuit which is connected in parallel with the inductive load (M) and comprises a freewheeling diode (D1) and a polarity reversal protection semiconductor switch (T2) connected in series,
the power semiconductor output stage (T1) being able to be switched on and off on the basis of a predefined desired value (Soll) using a pulse-width-modulated control signal, and
a location in the freewheeling circuit comprising the freewheeling diode (D1) and the polarity reversal protection semiconductor switch (T2) or in the series circuit comprising the inductive load (M) and the power semiconductor output stage (T1) being monitored for a voltage or a current,
**characterized in that**
the polarity reversal protection semiconductor switch (T2) can be turned off via a charge pump (LP) when the polarity of the supply voltage is reversed, and
the deactivation of the driving of the power semiconductor output stage (T1) can be initiated using the voltage or current which occurs or fails at the location when the freewheeling circuit is not operating.

2. Protective circuit according to Claim 1,
**characterized in that**
the power semiconductor output stage (T1) can be driven using a PWM controller (PWM-St), and **in that** the increased voltage or current failure which occurs in the event of a fault deactivates the PWM controller (PWM-St) in the freewheeling circuit.

3. Protective circuit according to Claim 2,
**characterized in that**
the PWM controller (PWM-St) is deactivated in a predefined amount of time less than or equal to 10 ms after the occurrence of the fault.

4. Protective circuit according to one of Claims 1 to 3,
**characterized in that**
a buffer capacitor (C1) is connected to the junction point between the freewheeling diode (D1) and the polarity reversal protection semiconductor switch (T2),
**in that** the voltage across the buffer capacitor (C1) rises above a predefined value in the event of a fault, and
**in that** the increased voltage across the buffer capacitor (C1) can be forwarded as a deactivation signal to the PWM controller (PWM-St).

5. Protective circuit according to Claim 4,
**characterized in that**
the increased voltage across the buffer capacitor (C1) can be forwarded as a digital deactivation signal to the PWM controller (PWM-St) via an analogue/digital converter.

6. Protective circuit according to Claim 4 or 5,
**characterized in that**
the voltage across the buffer capacitor (C1) is reduced via a voltage divider (R1, R2) and, once smoothed again (C2), can be forwarded to the analogue/digital converter.

7. Protective circuit according to one of Claims 4 to 6,
**characterized in that**
the voltage across the buffer capacitor (C1) or the reduced voltage can be compared with a predefined reference voltage in a comparator (V), and
**in that** the comparator (V) forwards a digital deactivation signal to the PWM controller (PWM-St) if the voltage across the buffer capacitor (C1) or the reduced voltage exceeds the reference voltage.

8. Protective circuit according to Claim 7,
**characterized in that**
the comparator (V) is provided with a self-holding circuit (D2, D3, R3) which maintains the deactivated state, and
**in that** the stable deactivated state of the comparator (V) can be cancelled using a reset signal (r) which can be supplied to the comparator (V) by the PWM controller (PWM-St).

9. Protective circuit according to Claim 1,
**characterized in that**
the drain-ground voltage of the power semiconductor output stage (T1) is monitored in a low-side circuit,
**in that** the drain-ground voltage can be compared with a predefined reference voltage in a comparator (V),
**in that** the comparator (V) outputs a digital deactivation signal to the PWM controller (PWM-St) when the drain-ground voltage exceeds the reference voltage, and
**in that** the driving of the power semiconductor output stage (T1) can be prevented and the reference voltage for the comparator (V) can be switched to be ineffective using the deactivation signal.

10. Protective circuit according to Claim 1,
**characterized in that**
the freewheeling circuit is monitored for failure of the clocked freewheeling current.

## Revendications

1. Circuit de protection associé à un circuit série constitué d'un étage final (T1) de semiconducteur de puissance et d'un consommateur inductif (M) raccordé en parallèle à un circuit de marche à vide constitué d'une diode (D1) de marche à vide raccordé en série à un commutateur (T2) à semiconducteur de protection contre l'inversion de polarité,
l'étage final (T1) de semiconducteur de puissance pouvant être branché et débranché en fonction d'une valeur de consigne prédéterminée (Soll) par un signal de commande à modulation d'impulsions,
la tension ou le courant étant surveillés en un emplacement du circuit de marche à vide constitué d'une diode (D1) de marche à vide et d'un commutateur (T2) à semiconducteur de protection contre l'inversion de polarité ou du circuit série constitué du consommateur inductif (M) et de l'étage final (T1) de semiconducteur de puissance,
**caractérisé en ce que**
le commutateur (T2) à semiconducteur de protection contre l'inversion de polarité peut être amené à l'état non conducteur par une pompe de charge (LP) lorsque la polarité de l'alimentation en tension est inversée et
**en ce que** le débranchement de la commande de l'étage final (T1) de semiconducteur de puissance peut être provoqué par l'intermédiaire de la diminution du courant et de l'apparition de la tension à l'emplacement du circuit de marche à vide en cas de non-fonctionnement de ce dernier.

2. Circuit de protection selon la revendication 1, **caractérisé en ce que** l'étage final (T1) de semiconducteur de puissance peut être commandé par l'intermédiaire d'une commande (PWM-St) par modulation de la largeur des impulsions et **en ce que** l'augmentation de la tension ou la diminution du courant qui surviennent en cas de défaut dans le circuit de marche à vide débranchent la commande (PWM-St) par modulation de la largeur des impulsions.

3. Circuit de protection selon la revendication 2, **caractérisé en ce que** le débranchement de la commande (PWM-St) par modulation de la largeur des impulsions a lieu en une durée inférieure ou égale à 10 ms après l'apparition d'un défaut.

4. Circuit de protection selon l'une des revendications 1 à 3, **caractérisé en ce qu'**un condensateur tampon (C1) est raccordé au point de raccordement entre la diode de marche à vide (D1) et le commutateur (T2) à semiconducteur de protection contre l'inversion de polarité, **en ce qu'**en cas de défaut, la tension aux bornes du condensateur tampon (C1) augmente au-delà d'une valeur prédéterminée et **en ce que** l'augmentation de la tension aux bornes du condensateur tampon (C1) peut être transmise comme signal de débranchement à la commande (PWM-St) par modulation de la largeur des impulsions.

5. Circuit de protection selon la revendication 4, **caractérisé en ce que** l'augmentation de la tension aux bornes du condensateur tampon (C1) peut être transmise comme signal numérique de débranchement à la commande (PWM-St) par modulation de la largeur des impulsions par l'intermédiaire d'un convertisseur analogique-numérique.

6. Circuit de protection selon les revendications 4 ou 5, **caractérisé en ce que** la tension aux bornes du condensateur tampon (C1) réduite par un diviseur de tension (R1, R2) et relissée (C2) peut être transmise au convertisseur analogique-numérique.

7. Circuit de protection selon l'une des revendications 4 à 6, **caractérisé en ce que** la tension aux bornes du condensateur tampon (C1) ou la tension réduite peuvent être comparées à une tension de référence dans un comparateur (V) et **en ce que** le comparateur (V) transmet à la commande (PWM-St) par modulation de la largeur des impulsions un signal numérique de débranchement lorsque la tension aux bornes du condensateur tampon (C1) ou la tension réduite dépassent la tension de référence.

8. Circuit de protection selon la revendication 7, **caractérisé en ce que** le comparateur (V) est doté d'un circuit (D2, D3, R3) d'auto-maintien qui maintient l'état de débranchement et **en ce que** l'état stable de débranchement du comparateur (V) peut être supprimé au moyen d'un signal de renvoi (r) qui peut être amené au comparateur (V) par la commande (PWM-St) par modulation de la largeur des impulsions.

9. Circuit de protection selon la revendication 1, **caractérisé en ce que** la tension drain - masse de l'étage final (T1) de semiconducteur de puissance est surveillée dans le circuit côté bas, **en ce que** la tension drain - masse peut être comparée à une tension de référence prédéterminée dans un comparateur (V), **en ce que** le comparateur (V) délivre un signal numérique de débranchement à la commande (PWM-St) par modulation de la largeur des impulsions lorsque la tension drain - masse dépasse la valeur de référence et **en ce que** le signal de débranchement peut désactiver l'étage final (T1) de semiconducteur de puissance et peut commuter à l'état désactivé la tension de référence du comparateur (V).

10. Circuit de protection selon la revendication 1, **caractérisé en ce que** la disparition du courant cadencé de marche à vide du circuit de marche à vide est surveillée.
